# EUROPEAN PATENT SPECIFICATION

(11) **EP 4 124 568 B1**
(45) Date of publication and mention of the grant of the patent: **19.02.2025**
(21) Application number: 22382556.3
(22) Date of filing: 09.06.2022
(51) Int. Cl.: B64C 17/00, B64D 37/04, B64D 37/30, B64C 1/00

(54) **AIRCRAFT WITH HYDROGEN TANK**
FLUGZEUG MIT WASSERSTOFFTANK
AÉRONEF ÉQUIPÉ D'UN RÉSERVOIR D'HYDROGÈNE

(30) Priority: 27.07.2021 ES 202130727
(43) Date of publication of application: 01.02.2023
(73) Proprietor: Airbus Operations, S.L.U., 28906 Getafe (Madrid) (ES)
(72) Inventor: BALLESTERO MÉNDEZ, Jorge, 28906 Getafe (ES)
(74) Representative: Elzaburu S.L.P.

(56) References cited:
- IT-A1- 201900 015 336
- US-A1- 2005 178 911
- US-A1- 2014 104 732
- US-A1- 2014 339 367
- US-A1- 2020 001 963
- DANIEL BREWER G ED - DANIEL BREWER G: "Chapter 1: Hydrogen in Aeronautics; Chapter 2: The Potential of Hydrogen as Fuel for Aircraft; Chapter 3: Early Transport Aircraft Studies; Chapter 4: Subsonic Transport Aircraft; Chapter 6: Military Aircraft", 4 June 1991, HYDROGEN AIRCRAFT TECHNOLOGY, CRC PRESS, INC, US, PAGE(S) 1-246, 301, ISBN: 978-0-8493-5838-8, XP009532608
- BREWER ET AL: "Aviation usage of liquid hydrogen fuel-prospects and problems", INTERNATIONAL JOURNAL OF HYDROGEN ENERGY, ELSEVIER, AMSTERDAM, NL, vol. 1, no. 1, 1 January 1976 (1976-01-01), pages 65 - 88, XP025413945, ISSN: 0360-3199, [retrieved on 19760101], DOI: 10.1016/0360-3199(76)90011-2

## Description

### Scope of the invention

The present invention relates to a configuration of a hydrogen-powered aircraft, an engine that burns hydrogen directly, or a hydrogen-powered fuel cell. The invention is intended to define the configuration of the aircraft, to efficiently balance the position and control of the centre of gravity of the aircraft, and therefore the stability thereof.

### State of the art

The use of hydrogen as propulsion fuel in air and aerospace vehicles has been being researched and developed since the late 18th century. Hydrogen was first used in balloons in 1783, and subsequently in airships such as the Zeppelin in 1893. Since then, there have been numerous projects to develop hydrogen-powered space rockets and aircraft, such as Suntan (USA, 1956), Saturn IV (USA, 1963), Tupolev Tu-155 (Soviet Union, 1988), Cryoplane (Europe, 2000), HyShot (Australia, 2001), NASA X-43 (USA, 2004), Phantom Eye (USA, 2013), etc., with a range of different configurations.

Hydrogen is the most widespread chemical substance in the universe. Hydrogen melts from solid to liquid state at 14K (-259ºC) and evaporates into gas state at 20K (-253ºC). Consequently, to avoid storing hydrogen in gas state, which requires high pressure and would entail a significant weight penalty for an aircraft, the hydrogen has to be stored in liquid state at between 14K and 20K inside cryogenic tanks. On account of the physical properties of liquid hydrogen, which weighs one third as much as ordinary kerosene but is four times more voluminous, the configuration of a hydrogen-powered aircraft is a major technological challenge. The difficulty lies in the installation of the cryogenic tanks required to store the liquid hydrogen and the effect thereof on the positioning and control of the centre of gravity of the aircraft to ensure the stability thereof. Depending on the configuration, this effect can be more pronounced, such as in an aircraft with the engines and hydrogen tanks installed towards the rear of the aircraft.

Most of the known solutions address this problem of positioning and controlling the centre of gravity by adding additional hydrogen fuel tanks in the front fuselage, either inside or in the upper portion of the fuselage. Other alternatives involve increasing the section of the cabin to obtain aircraft with double aisles instead of single aisles.

The positioning and design of the tanks or tanks of fuel in a hydrogen aircraft differs significantly from the positioning of kerosene tanks. The fuel in kerosene tanks is stored primarily inside the wings and, in some aircraft, also in the horizontal plane of the tail, to better position and control the centre of gravity.

The main design factors for liquid hydrogen tanks are as follows:
- Shape: related to the most efficient way of transporting more fuel weight (gravimetric index) and withstanding the related internal and external pressure loads. For both reasons, spherical and cylindrical shapes are usually used.
- Volume: related to the mission range of the aircraft, and therefore the quantity of fuel required and the dimensions of the tank. The greater the required range and volume, the more complex it becomes to incorporate hydrogen tanks without affecting the centring and stability of the aeroplane.
- Insulation: related to keeping the hydrogen in liquid state to reduce the transformation into gas and to obviate issues with permeability and overpressure in the tank, which are controlled using ventilation systems, and hydrogen leaks, which are controlled using recovery systems.

Other characteristics of the aircraft need to be taken into account to correctly balance the centre of gravity of the aircraft, such as the length of the fuselage, the position and geometry of the wing, the thrust of the engine and the vertical position thereof, i.e. on the wing or in the rear fuselage. Furthermore, all of the forces acting on the aircraft need to be taken into account, such as the static downward weight of the aircraft, the upward lift of the wing, the downward lift of the horizontal tailplane (HTP), and the lift of the vertical tailplane (VTP) in both directions, as well as the backward dynamic aerodynamic resistance component.

There are different configurations of liquid hydrogen tanks and means for building such tanks into the aircraft. Essentially, tanks can be categorized as built-in or separate.

An example of a separate solution would be positioning the liquid hydrogen fuel tanks beneath the wing. Examples of built-in solutions include positioning the tanks inside the rear fuselage, known as a tail configuration, on top of the passenger decks, known as a dorsal configuration, or combinations of the two, known as hybrid dual dorsal/tail configurations.

It is known document US2005178911 disclosing a triple-fuselage aircraft and families of aircraft of said type.

It is also known document US2014104732A1 disclosing a supply system for supplying energy in an aircraft includes at least one electrical line including at least one core connectable to a pole of a current source, an electrically conductive shield, and a detection unit having at least two electrical inputs.

It is also known document US2014339367 disclosing a hybrid fuel airplane and method. A cryogenic fuel is transferred to an airplane propulsor from an airplane fuel system comprising a cryogenic fuel tank and a jet fuel tank.

It is also known document US2020001963 disclosing a pressure bulkhead for a pressurized fuselage of a vehicle has an axial inner surface and an axial outer surface.

It is also known document IT201900015336 disclosing a shuttle bus, with one or two floors, with vertical take-off and landing with electric multi-thrusters or turbofans, for the civil and military transport of people and materials.

It is also known document DANIEL BREWER G ED - DANIEL BREWER G, Chapter 1: Hydrogen in Aeronautics; Chapter 2: The Potential of Hydrogen as Fuel for Aircraft; Chapter 3: Early Transport Aircraft Studies; Chapter 4: Subsonic Transport Aircraft; Chapter 6: Military Aircraft, HYDROGEN AIRCRAFT TECHNOLOGY, CRC PRESS, INC, US, disclosing the use of Hydrogen tanks in aeronautics.

It is also known document BREWER ET AL, "Aviation usage of liquid hydrogen fuel-prospects and problems", INTERNATIONAL JOURNAL OF HYDROGEN ENERGY, ELSEVIER, AMSTERDAM, NL disclosing the aviation usage of liquid hydrogen fuel-prospects.

### Summary of the invention

The invention according to the appended claims defines an aircraft configuration, including the arrangement of the key elements (tanks, engines, passengers, etc.), that improves efficiency when positioning and controlling the centre of gravity when the aircraft is powered using liquid hydrogen.

More specifically, the technical problem resolved by the configuration according to the invention is how to position and control the centre of gravity of the aircraft while maximizing the space available for passengers and minimizing the aerodynamic penalty for the aircraft.

The centre of gravity can be defined as the point on which the force resulting from gravitational pull acts. The centre of gravity of an aircraft is variable as a result of the gradual consumption of fuel during the flight and the different possible passenger loads for a given mission. Consequently, in order to calculate the centre of gravity of an aircraft, the centre of gravity is calculated for different configurations such as to define a range. This range covers a configuration in which all of the passengers are in their seats and the fuel tanks are full, and other intermediate configurations concerning the fullness of the fuel tank and the number of passengers. Aircraft are designed so that the centre of gravity is within said predetermined range, thereby guaranteeing stability.

For this purpose, an aircraft is defined according to claim 1, in which the aircraft has a longitudinal axis, a vertical axis, a centre of gravity and comprises:
- a fuselage, which in turn comprises:
   ∘ a front fuselage, located between a front end of the fuselage and the centre of gravity of the fuselage along the longitudinal axis of the aircraft,
   o a rear fuselage located between the centre of gravity of the aircraft and a rear end of the fuselage along the longitudinal axis of the aircraft.
   ∘ a lower deck that is positioned inside the fuselage and designed to accommodate passenger seats.
   ∘ a liquid hydrogen tank designed to supply an engine. The liquid hydrogen tank is located so that the centre of gravity thereof is behind the centre of gravity of the aircraft along the longitudinal axis thereof.
   ∘ an upper deck designed to accommodate further passenger seats and located inside the front fuselage and above the lower deck along the vertical axis of the aircraft.

The aircraft comprises a waste water tank in the rear fuselage and a fresh water tank in the front fuselage.

In accordance with the foregoing, the liquid hydrogen tank or tanks and the engines may be positioned on the wings or in the rear fuselage, while the front fuselage comprises a variable length two-deck fuselage section to balance the position of the centre of gravity of the aircraft more efficiently. The invention enables the centre of gravity to be moved towards the front of the aircraft in consideration of fuel consumption during flight, for example behind the wings on take-off and in front of the wings for landing. The proposed configuration for the aircraft helps to optimize aircraft aerodynamics in each phase of flight.

When static, assuming that the position of the wing and of the engines in the rear fuselage is invariable, a ratio between the quantity of liquid hydrogen fuel stored in the tanks in the rear fuselage and the number of passengers, payload, on the upper deck of the front fuselage can be determined. Similarly, a ratio between the weight of the upper deck of the front fuselage and the liquid hydrogen storage in the rear fuselage can be determined to optimize the position and control of the centre of gravity of the aircraft, so that the forces and moments generated by these forces on the centre of gravity can be balanced.

If the mission range of the aircraft has to be extended, thereby increasing the volume and weight of the hydrogen stored in the rear fuselage of the aircraft, the upper deck of the front fuselage can be extended as far as the central zone of the aeroplane, where the centre of gravity along the longitudinal axis of the aircraft is assumed to be located, thereby enabling the configuration according to the invention to be adapted according to the intended use of the aircraft. The extension of the upper deck is related to the mission of the aircraft on the basis of the payload (number of passengers) and range.

As mentioned above, the hydrogen-powered engine or engines, using direct combustion or fuel cells, can be positioned in the rear fuselage or beneath the wings. The liquid hydrogen fuel tanks are preferably installed inside the unpressurized rear fuselage. This configuration enables the passenger zone to be separated from the tank zone, which is for example safer than a dorsal arrangement in which the tanks are positioned above the passenger cabin.

Although the invention is initially intended for short- and medium-range single-aisle aircraft with engines mounted at the rear end, it could also be used in double-aisle aircraft with engines also installed in the rear fuselage or beneath the wings, and in single-aisle aircraft with engines beneath the wings.

The arrangement according to the invention therefore enables increased passenger transport capacity compared to a single-deck cabin configuration for the same aircraft length. Moreover, the centre of gravity of the aircraft is balanced more efficiently in relation to the weight associated with the liquid hydrogen tanks and the engines installed in the rear fuselage or beneath the wings.

Moreover, the dynamic behaviour of the configuration of the aircraft with two decks in the front fuselage is expected to be better than the prior art solution in which the fuel tank is positioned in the front fuselage above the deck. This is achieved by a better distribution of mass and rigidity of the structure of the aircraft in the configuration according to the invention.

Furthermore, the aircraft configuration according to the invention also provides better aerodynamic performance and better directional stability compared to solutions in the prior art with dorsal liquid hydrogen tanks located in the front fuselage. This is because the join to the structure in the dorsal configuration is limited to a few fastening points to limit the coupling of deformation between the tank and the structure of the fuselage. The configuration with the tanks in the rear fuselage provides greater flexibility in terms of the positions of the fastening points, which affect frequency response and rigidity and determine the intrinsic modes of the structure and the amplifying effect thereof.

Furthermore, the volume/surface ratio, with volume (V = Π R² x L) and surface (S = 2ΠR x L) for a cylindrical tank, in the solution with the tank installed in the rear fuselage is greater than the dorsal configuration as a result of the greater radius (R) of the tank. This greater volume/surface ratio means that the wet surface associated with the storage of the tank is reduced in the configuration according to the invention compared to the dorsal configuration.

Furthermore, the dorsal configuration in the prior art creates two lobes: a lower lobe defined by the passenger cabin and an upper lobe defined by the tank, forming a transition zone between the two lobes that is liable to generate vortexes that adversely affect the aerodynamic performance of the aircraft.

According to the foregoing, the main benefits and advantages of the configuration according to the invention are as follows:
- Better and more efficient positioning and control of the centre of gravity of the aircraft compared to known configurations in the prior art, on account of the inclusion of an upper deck in the front fuselage.
- Flexible configuration in terms of payload capacity and range.
- Better gravimetric index for the conical and cylindrical liquid hydrogen tanks installed in the rear fuselage, since the volume/surface ratio is greater than in a dorsal solution for a similar tank length.
- Greater aerodynamic performance thanks to the larger volume/surface ratio of the solution in which the tank is located in the rear fuselage compared to the dorsal solution, for the same quantity of stored fuel. This also improves the directional stability of the aircraft.
- Better dynamic behaviour than in an aircraft configuration with a dorsal tank for a similar tank length.
- Additional volume in the upper fairing of the front fuselage for installing systems, thereby enabling the lower fairing of the aircraft to be smaller.
- Lower manufacturer's weight empty (MWE) of the aircraft, i.e. the weight of the aeroplane as built, on account of:
   - a better gravimetric index of the liquid hydrogen fuel tanks,
   - more efficient positioning of all of the systems and engines related to the liquid hydrogen,
   - the positioning of the engines in the rear of the fuselage, and
   - the additional space in the upper portion of the fairing for installing systems.

### Description of figures

A set of drawings is provided to complement the description and facilitate understanding of the invention. Said drawings are an integral part of the description and illustrate preferred embodiments of the invention. The drawings comprise the following figures:
Figures 1A and 1B are schematic side views of two aircraft configurations known in the prior art.
Figure 2 is a schematic side view of an example embodiment of an aircraft configuration according to the invention, with a schematic analysis of forces and moments acting on said aircraft.
Figure 3 is a cross section of the front fuselage and rear fuselage of the aircraft configuration shown in Figure 2, in the passenger seating zone.
Figure 4 is a schematic side view of an example embodiment of an aircraft configuration.
Figure 5 is a schematic side view of another example embodiment of an aircraft configuration and the flexible arrangement of the upper deck and the rear portion of the rear fuselage.
Figure 6 is a schematic side view of another example embodiment of an aircraft configuration.
Figure 7 is a cross section of the front fuselage and rear fuselage in a zone of the fuel tank in the aircraft configuration shown in Figure 2 compared with a cross section of the front fuselage in a configuration according to the prior art with a dorsal arrangement of the fuel tank known in the prior art.

### Detailed description of the invention

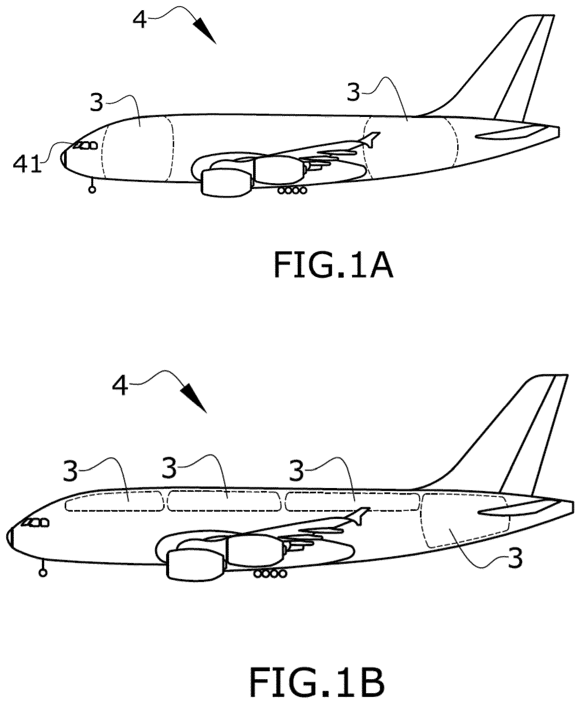

Most of the solutions in the prior art address the problem of positioning and controlling the centre of gravity by adding liquid hydrogen tanks (3) in the front fuselage (41) of the aircraft, either inside the fuselage (4), as shown in Figure 1A, or in the upper portion of the fuselage (4) on top of the passenger compartment, as shown in Figure 1B.

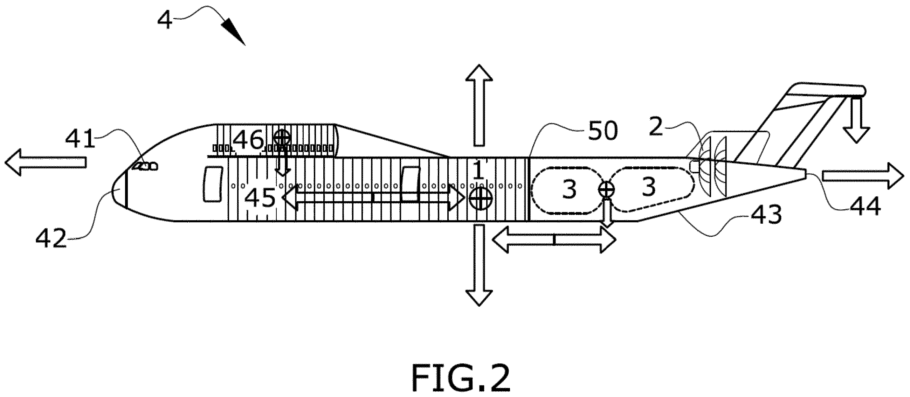

Figure 2 shows an example embodiment of an aircraft configuration according to the invention, with a schematic analysis of forces and moments acting on the aircraft. The aircraft includes:
- an engine (2),
- a fuselage (4) that includes:
   o a front fuselage (41) located between the front end (42) of the fuselage (4) and the centre of gravity (1) along the longitudinal axis of the aircraft,
   o a rear fuselage (43) located between the centre of gravity (1) of the aircraft and the rear end (44) of the fuselage (4) along the longitudinal axis of the aircraft,
   o a lower deck (45) positioned inside the fuselage (4) and designed to accommodate the passenger seats. The lower deck (45) can be single-aisle or double-aisle.
- two liquid hydrogen tanks (3):
   o designed to supply the engine (2), and
   o located in the rear fuselage (43),
- an upper deck (46) that is designed to accommodate the passenger seats and positioned inside the front fuselage (41) and above the lower deck (45) along the axis Z of the aircraft.

Figure 2 also shows the main forces acting on the aircraft during flight in the configuration shown:
- The forward thrust of the engine (2).
- The downward weight of the aircraft.
- The upward lift of the wing and the downward lift of the horizontal tailplane (HTP).
- The rearward aerodynamic resistance.

In general, these forces generate moments about the centre of gravity (1) of the aircraft in the following manner:
- The thrust of the engine (2) and the lift from the wing generate a nose-down moment in the aircraft.
- The downward lift from the horizontal tailplane (HTP) generates a nose-up moment in the aircraft.

In an example embodiment, the weight ratio between the upper deck (46) located in the front fuselage (41) and the liquid hydrogen tank (3) located in the rear fuselage (43) is as close as possible to 1 when the tanks are full and the passengers are seated. For example, the ratio can be between 0.7 and 1.3, and more specifically between 0.7 and 0.9.

Also in an example embodiment, the ratio of moments between the upper deck (46) in the front fuselage (41) in relation to the centre of gravity (1) of the aircraft and the liquid hydrogen tank (3) in relation to the centre of gravity (1) of the aircraft is approximately 1. This may for example be the case for a single-aisle cabin configuration with five seats per row on the upper deck (46).

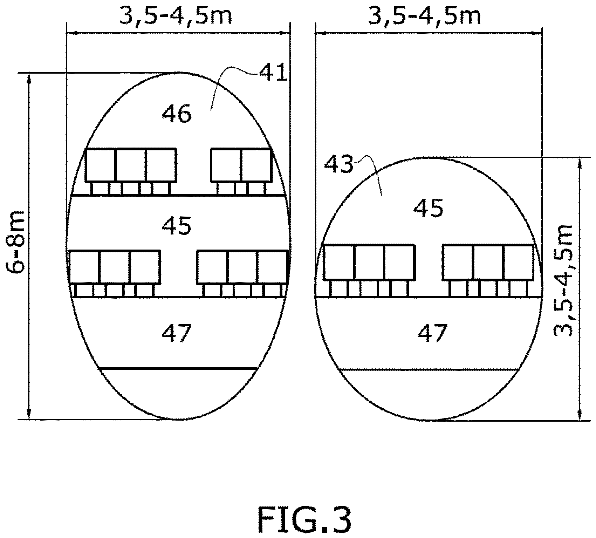

Figure 3 shows an example embodiment of a cross section of the fuselage (4) of the aircraft with two decks (45, 46) in the front fuselage (41) and a single deck (45) in the rear fuselage (43). The cargo compartment (47) of the aircraft beneath the deck (45) along the axis Z of the aircraft is also shown.

Figure 3 shows the range of values of the height and width ratio in the example embodiment shown.

In the example embodiment shown, the rear fuselage (43) only has one deck, the lower deck (45).

For the example embodiment shown in Figures 2, 4, 5 and 6, the features of the aircraft could be:
- POWER: Two unducted single fan (USF) engines positioned in the rear fuselage (43).
- CAPACITY: 250 passengers, 175 passengers on the lower deck and 75 passengers on the upper deck.
- RANGE: 2000 NM
- FUSELAGE LENGTH: 49 m
- LIQUID HYDROGEN CAPACITY: Approximately 75-80 m³ (5,325-5,680 kg)

The engine (2) can be positioned inside the rear fuselage (43) of the aircraft in the unpressurized zone or beneath the wings. The wings can in turn be positioned on each side of the fuselage (4) in the central, lower or upper zones along the axis Z of the aircraft.

The centre of gravity (1) of the aircraft is further back when the engines (2) are positioned in the rear fuselage (43) than when the engines (2) are positioned beneath the wing.

Any type of engine, such as turbofans or propellers, can be used in both configurations.

Since the centre of gravity (1) varies during flight as a result of consumption of the fuel in the liquid hydrogen tanks (3), the front of the aircraft gets heavier in relation to the rear, which generates a moment. This nose-down moment of the aircraft has to be compensated primarily by the horizontal tailplane (HTP), which penalizes the performance efficiency of the aircraft.

To minimize the effect of the change of the centre of gravity and the loss of efficiency, the liquid hydrogen tanks (3) are preferably positioned close to the centre of gravity (1), i.e. as close as possible to the centre of gravity, to reduce the effect of the aforementioned moment.

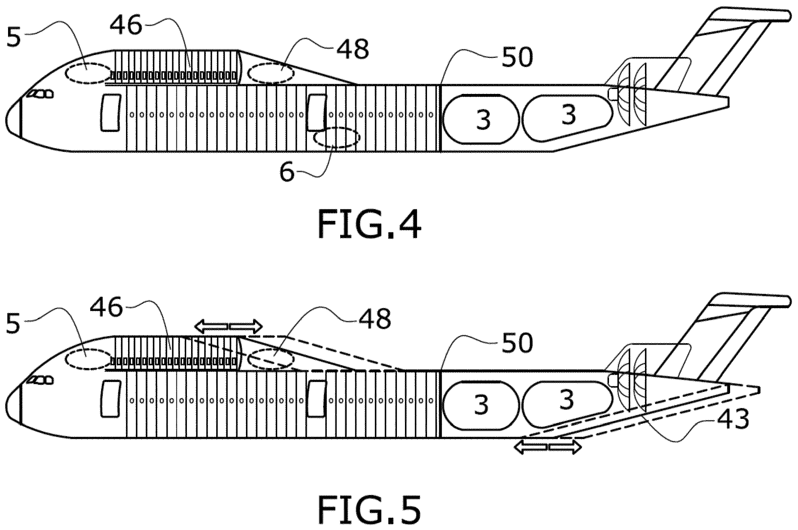

According to the invention, the aircraft includes a fresh water tank (5) positioned in the front fuselage (41) and a waste water tank (6) in the rear fuselage (43). This example embodiment is shown in Figure 4.

The rear fuselage (43) has a partition bulkhead (50) between the pressurized zone and the unpressurized zone of the aircraft and the waste water tank (6) is located in front of the partition bulkhead (50) along a longitudinal axis of the aircraft in the pressurized zone.

Ideally, the waste water tank (6) can be positioned in the rear of the cargo compartment.

The waste water tank (6) is positioned as close as possible to the partition bulkhead (50), i.e. as far back as possible within the pressurized zone, and is used to offset the consumption of hydrogen during the flight, which causes the centre of gravity (1) to move forward, and the waste water partially offsets this variation.

Figure 4 also shows an additional volume in the rear of the upper deck (46) for the installation of systems (48) that also help to move the centre of gravity (1) forwards. The system installation space (48) is therefore positioned inside the front fuselage (41) above the lower deck (45) along the axis Z of the aircraft and behind the upper deck (46) along the longitudinal axis of the aircraft.

The dash lines in Figure 5 show how the configuration according to the invention also enables a flexible distribution of the different elements. Depending on the aircraft mission, the upper deck (46) can be increased or reduced to accommodate more or fewer passengers and to offset the position of the centre of gravity (1) more efficiently. Specifically, the upper deck (46) can extend as far as a transverse plane containing the centre of gravity (1) of the aircraft along the longitudinal axis thereof.

Similarly, the length of the rear fuselage (43) can also be modified to accommodate larger or smaller liquid hydrogen tanks (3).

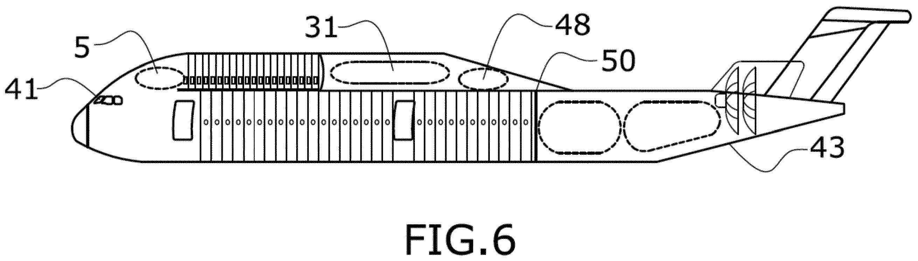

Figure 6 shows an example embodiment in which it is only necessary to increase the range of the mission of the aircraft. The flexible configuration according to the invention can include an additional hydrogen tank (31) positioned inside the front fuselage (41) above the lower deck (45) along the axis Z of the aircraft and behind the upper deck (46) along the longitudinal axis of the aircraft to increase the range of the aircraft.

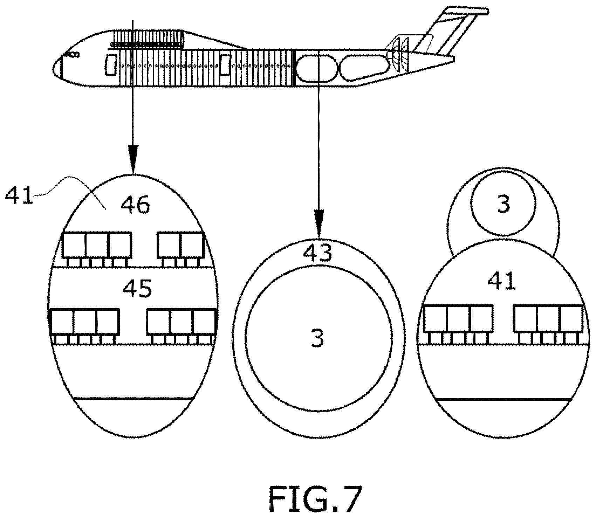

Finally, Figure 7 shows a comparison between the cross section of the front fuselage (41) with two decks (45, 46) and the configuration in the prior art with a liquid hydrogen tank in a dorsal arrangement in the front fuselage (41).

The dynamic behaviour of the configuration according to the invention is expected to be better than the solution in the prior art on account of better mass distribution and rigidity of the structure in the front fuselage (41) of the aircraft in the double-deck configuration compared to a dorsal tank, in which the join to the structure is limited to a few fastening points (quasi-isostatic) to limit the coupling of deformation between the tank and the fuselage structure. The configuration with the liquid hydrogen tanks (3) in the rear fuselage (43) provides greater flexibility in terms of the positions of the fastening points, which affect frequency response and rigidity and determine the intrinsic modes of the structure and the amplifying effect thereof.

As shown in Figure 7, the configuration according to the invention reduces the size of the gaps and steps about the liquid hydrogen tank (3) compared to the dorsal solution. The dorsal configuration creates two lobes: a lower lobe defined by the passenger cabin and an upper lobe defined by the liquid hydrogen tank (3), forming a transition zone between the two lobes that is liable to generate vortexes that reduces the aerodynamic performance of the aircraft.

The aforementioned figures show a single-aisle deck (45, 46), but a double-aisle deck (45, 46) is also possible.

## Claims

1. Aircraft comprising a longitudinal axis, a vertical axis, a centre of gravity (1) and further comprising:
- a fuselage (4) that comprises:
o a front fuselage (41) located between a front end (42) of the fuselage (4) and the centre of gravity (1) of the aircraft along the e longitudinal axis of the aircraft,
o a rear fuselage (43) located between the centre of gravity (1) of the aircraft and a rear end (44) of the fuselage (4) along the longitudinal axis of the aircraft,
o a lower deck (45) positioned inside the fuselage (4) and designed to accommodate passenger seats,
∘ - a liquid hydrogen tank (3) located so that the centre of gravity of the liquid hydrogen tank (3) is behind the centre of gravity (1) of the aircraft along the e longitudinal axis of the aircraft,
∘ an upper deck (46):
- designed to accommodate further passenger seats,
- located inside the front fuselage (41), and
- located above the lower deck (45) along the vertical axis of the aircraft, the aircraft being **characterized in that** it comprises a waste water tank (6) in the rear fuselage (43) and a fresh water tank (5) in the front fuselage (41).

2. Aircraft according to Claim 1, **characterized in that** the weight ratio between the upper deck (46) in the front fuselage (41) and the liquid hydrogen tank (3) is between 0.7 and 1.3 when the hydrogen tanks (3) are full and the passengers are seated

3. Aircraft according to Claim 2, **characterized in that** the weight ratio between the upper deck (46) in the front fuselage (41) and the liquid hydrogen tank (3) is between 0.7 and 0.9 when the hydrogen tanks (3) are full and the passengers are seated

4. Aircraft according to any one of the preceding claims, characterized ir that the ratio of moments between the upper deck (46) in the front fuselage (41) in relation of the centre of gravity (1) of the aircraft and the liquid hydrogen tank (3) in relation to the centre of gravity (1) of the aircraft is 1 when the hydrogen tanks (3) are full and the passengers are seated

5. Aircraft according to any one of the preceding claims, characterized ir that it comprises an engine (2) positioned in the rear fuselage (43) of the aircraft.

6. Aircraft according to claim 5, **characterized in that** the aircraft comprises wings (4), and the engine (2) is positioned beneath said wings (4).

7. Aircraft according to any one of the preceding claims, characterized ir that it comprises an additional hydrogen tank (31) positioned inside the front fuselage (41) above the lower deck (45) and behind the upper deck (46) along the longitudinal axis of the aircraft to increase the range of the aircraft.

8. Aircraft according to any one of the preceding claims, characterized ir that the upper deck (46) extends as far as a transverse plane containing the centre of gravity (1) along the longitudinal axis of the aircraft.

9. Aircraft according to any one of the preceding claims, characterized ir that the lower deck (45) and the upper deck (46) are single- or dual-aisle decks.

10. Aircraft according to claim 1, **characterized in that** the rear fuselage (43) comprises a partition bulkhead (50) between a pressurized zone and an unpressurized zone of the aircraft and the waste water tank (6) is located in front of the partition bulkhead (50) along a longitudinal axis of the aircraft in the pressurized zone.

11. Aircraft according to any one of the preceding claims, characterized ir that the rear fuselage (43) only comprises a lower deck (45) for passenger seats.

12. Aircraft according to any one of the preceding claims, characterized ir that it comprises a system installation space (48) positioned inside the front fuselage (41) above the lower deck (45) and in front of and/or behind the upper deck (46) along the longitudinal axis of the aircraft.

## Patentansprüche

1. Luftfahrzeug, das eine Längsachse, eine vertikale Achse, einen Schwerpunkt (1) umfasst und ferner Folgendes umfasst:
- einen Rumpf (4), der Folgendes umfasst:
o einen vorderen Rumpf (41), der entlang der Längsachse des Luftfahrzeugs zwischen einem vorderen Ende (42) des Rumpfes (4) und dem Schwerpunkt (1) des Luftfahrzeugs angeordnet ist,
o einen hinteren Rumpf (43), der entlang der Längsachse des Luftfahrzeugs zwischen dem Schwerpunkt (1) des Luftfahrzeugs und einem hinteren Ende (44) des Rumpfes (4) angeordnet ist,
o ein Unterdeck (45), das im Rumpf (4) positioniert und zur Aufnahme von Passagiersitzen ausgestaltet ist,
o einen Flüssigwasserstofftank (3), der so angeordnet ist, dass der Schwerpunkt des Flüssigwasserstofftanks (3) entlang der Längsachse des Luftfahrzeugs hinter dem Schwerpunkt (1) des Luftfahrzeugs liegt,
o ein Oberdeck (46):
- das zur Aufnahme weiterer Passagiersitze ausgestaltet ist,
- das im vorderen Rumpf (41) angeordnet ist, und
- das entlang der vertikalen Achse des Luftfahrzeugs über dem Unterdeck (45) angeordnet ist,
wobei das Luftfahrzeug **dadurch gekennzeichnet ist, dass** es einen Abwassertank (6) im hinteren Rumpf (43) und einen Frischwassertank (5) im vorderen Rumpf (41) umfasst.

2. Luftfahrzeug nach Anspruch 1, **dadurch gekennzeichnet, dass** das Gewichtsverhältnis zwischen dem Oberdeck (46) im vorderen Rumpf (41) und dem Flüssigwasserstofftank (3) bei gefüllten Wasserstofftanks (3) und sitzenden Passagieren zwischen 0,7 und 1,3 liegt.

3. Luftfahrzeug nach Anspruch 2, **dadurch gekennzeichnet, dass** das Gewichtsverhältnis zwischen dem Oberdeck (46) im vorderen Rumpf (41) und dem Flüssigwasserstofftank (3) bei gefüllten Wasserstofftanks (3) und sitzenden Passagieren zwischen 0,7 und 0,9 liegt.

4. Luftfahrzeug nach einem der vorhergehenden Ansprüche, **dadurch gekennzeichnet, dass** das Momentverhältnis zwischen dem Oberdeck (46) im vorderen Rumpf (41) in Relation zum Schwerpunkt (1) des Luftfahrzeugs und dem Flüssigwasserstofftank (3) in Relation zum Schwerpunkt (1) des Luftfahrzeugs bei gefüllten Wasserstofftanks (3) und sitzenden Passagieren 1 beträgt.

5. Luftfahrzeug nach einem der vorhergehenden Ansprüche, **dadurch gekennzeichnet, dass** es ein Triebwerk (2) umfasst, das im hinteren Rumpf (43) des Luftfahrzeugs positioniert ist.

6. Luftfahrzeug nach Anspruch 5, **dadurch gekennzeichnet, dass** das Luftfahrzeug Flügel (4) umfasst und das Triebwerk (2) unterhalb der Flügel (4) positioniert ist.

7. Luftfahrzeug nach einem der vorhergehenden Ansprüche, **dadurch gekennzeichnet, dass** es einen zusätzlichen Wasserstofftank (31) umfasst, der im vorderen Rumpf (41) entlang der Längsachse des Luftfahrzeugs über dem Unterdeck (45) und hinter dem Oberdeck (46) positioniert ist, um die Reichweite des Luftfahrzeugs zu vergrößern.

8. Luftfahrzeug nach einem der vorhergehenden Ansprüche, **dadurch gekennzeichnet, dass** sich das Oberdeck (46) entlang der Längsachse des Luftfahrzeugs bis zu einer den Schwerpunkt (1) enthaltenden Querebene erstreckt.

9. Luftfahrzeug nach einem der vorhergehenden Ansprüche, **dadurch gekennzeichnet, dass** das Unterdeck (45) und das Oberdeck (46) Decks mit einem oder zwei Gängen sind.

10. Luftfahrzeug nach Anspruch 1, **dadurch gekennzeichnet, dass** der hintere Rumpf (43) eine Trennwand (50) zwischen einer druckbeaufschlagten Zone und einer drucklosen Zone des Luftfahrzeugs umfasst und der Abwassertank (6) entlang einer Längsachse des Luftfahrzeugs in der druckbeaufschlagten Zone vor der Trennwand (50) angeordnet ist.

11. Luftfahrzeug nach einem der vorhergehenden Ansprüche, **dadurch gekennzeichnet, dass** der hintere Rumpf (43) nur ein Unterdeck (45) für Passagiersitze umfasst.

12. Luftfahrzeug nach einem der vorhergehenden Ansprüche, **dadurch gekennzeichnet, dass** es einen Systeminstallationsraum (48) umfasst, der im vorderen Rumpf (41) entlang der Längsachse des Luftfahrzeugs über dem Unterdeck (45) und vor und/oder hinter dem Oberdeck (46) positioniert ist.

## Revendications

1. Aéronef comprenant un axe longitudinal, un axe vertical, un centre de gravité (1) et comprenant en outre :
- un fuselage (4) qui comprend :
∘ un fuselage avant (41) situé entre une extrémité avant (42) du fuselage (4) et le centre de gravité (1) de l'aéronef le long de l'axe longitudinal de l'aéronef,
o un fuselage arrière (43) situé entre le centre de gravité (1) de l'aéronef et une extrémité arrière (44) du fuselage (4) le long de l'axe longitudinal de l'aéronef,
o un pont inférieur (45) positionné à l'intérieur du fuselage (4) et conçu pour accueillir des sièges passagers,
o un réservoir d'hydrogène liquide (3) situé de sorte que le centre de gravité du réservoir d'hydrogène liquide (3) soit derrière le centre de gravité (1) de l'aéronef le long de l'axe longitudinal de l'aéronef,
o un pont supérieur (46) :
- conçu pour accueillir des sièges passagers supplémentaires,
- situé à l'intérieur du fuselage avant (41), et
- situé au-dessus du pont inférieur (45) le long de l'axe vertical de l'aéronef,
l'aéronef étant **caractérisé en ce qu'**il comprend un réservoir d'eaux usées (6) dans le fuselage arrière (43) et un réservoir d'eau propre (5) dans le fuselage avant (41) .

2. Aéronef selon la revendication 1, **caractérisé en ce que** le rapport pondéral entre le pont supérieur (46) dans le fuselage avant (41) et le réservoir d'hydrogène liquide (3) est compris entre 0,7 et 1,3 lorsque les réservoirs d'hydrogène (3) sont pleins et que les passagers sont assis.

3. Aéronef selon la revendication 2, **caractérisé en ce que** le rapport pondéral entre le pont supérieur (46) dans le fuselage avant (41) et le réservoir d'hydrogène liquide (3) est compris entre 0,7 et 0,9 lorsque les réservoirs d'hydrogène (3) sont pleins et que les passagers sont assis.

4. Aéronef selon l'une quelconque des revendications précédentes, **caractérisé en ce que** le rapport des moments entre le pont supérieur (46) dans le fuselage avant (41) relativement au centre de gravité (1) de l'aéronef et le réservoir d'hydrogène liquide (3) relativement au centre de gravité (1) de l'aéronef est de 1 lorsque les réservoirs d'hydrogène (3) sont pleins et que les passagers sont assis.

5. Aéronef selon l'une quelconque des revendications précédentes, **caractérisé en ce qu'**il comprend un moteur (2) positionné dans le fuselage arrière (43) de l'aéronef.

6. Aéronef selon la revendication 5, **caractérisé en ce que** l'aéronef comporte des ailes (4), et le moteur (2) est positionné sous lesdites ailes (4).

7. Aéronef selon l'une quelconque des revendications précédentes, **caractérisé en ce qu'**il comprend un réservoir d'hydrogène additionnel (31) positionné à l'intérieur du fuselage avant (41) au-dessus du pont inférieur (45) et derrière le pont supérieur (46) le long de l'axe longitudinal de l'aéronef pour augmenter la portée de l'aéronef.

8. Aéronef selon l'une quelconque des revendications précédentes, **caractérisé en ce que** le pont supérieur (46) s'étend jusqu'à un plan transversal contenant le centre de gravité (1) le long de l'axe longitudinal de l'aéronef.

9. Aéronef selon l'une quelconque des revendications précédentes, **caractérisé en ce que** le pont inférieur (45) et le pont supérieur (46) sont des ponts à couloir unique ou double.

10. Aéronef selon la revendication 1, **caractérisé en ce que** le fuselage arrière (43) comprend une cloison de séparation (50) entre une zone pressurisée et une zone non pressurisée de l'aéronef et le réservoir d'eaux usées (6) est situé devant la cloison de séparation (50) le long d'un axe longitudinal de l'aéronef dans la zone pressurisée.

11. Aéronef selon l'une quelconque des revendications précédentes, **caractérisé en ce que** le fuselage arrière (43) comprend uniquement un pont inférieur (45) pour sièges passagers.

12. Aéronef selon l'une quelconque des revendications précédentes, **caractérisé en ce qu'**il comprend un espace d'installation (48) du système positionné à l'intérieur du fuselage avant (41) au-dessus du pont inférieur (45) et devant et/ou derrière le pont supérieur (46) le long de l'axe longitudinal de l'aéronef.
